# EUROPÄISCHE PATENTANMELDUNG

(11) **EP 4 847 284 A1**
(43) Veröffentlichungstag der Anmeldung: **02.12.2026**
(21) Anmeldenummer: 26166767.9
(22) Anmeldetag: 23.03.2026
(51) Int. Cl.: B60J 3/04, B62D 33/06

(54) **FAHRZEUGKABINE FÜR EINEN LANDWIRTSCHAFTLICHEN TRAKTOR, LANDWIRTSCHAFTLICHER TRAKTOR UND VERFAHREN ZUM BETRIEB EINES LANDWIRTSCHAFTLICHEN TRAKTORS**

(30) Priorität: 26.05.2025 DE 102025120510
(71) Anmelder: CLAAS Tractor S.A.S., 78141 Vélizy-Villacoublay Cedex (FR)
(72) Erfinder: Johannsmann, Christoph, 33442 Herzebrock-Clarholz (DE); Evers, Maxime, 58000 Nevers (FR); Villette, Clement, 58310 BOUHY (FR); Schulte-Uebbing, Markus, 44339 Dortmund (DE); Besand, Christian, 33739 Bielefeld (DE); Reinhardt, Alexander, 33332 Gütersloh (DE)
(74) Vertreter: CLAAS Gruppe

(57) **Zusammenfassung**

Die Erfindung betrifft eine Fahrzeugkabine (1) für einen landwirtschaftlichen Traktor (2), umfassend einen von Raumbegrenzungselementen (10) räumlich umbauten Kabineninnenraum (5), wobei eines der Raumbegrenzungselemente (10) von einer Windschutzscheibe (3) und ein weiteres der Raumbegrenzungselemente (10) von einem Kabinendach (4) gebildet sind, wobei in dem Kabinendach (4) eine transparente Dachscheibe (6) angeordnet ist. Um einen alternativen Schutz vor Blendlicht und Wärmeeintrag zur Verfügung zu stellen, umfasst die erfindungsgemäße Fahrzeugkabine (1) eine ansteuerbare Einstelleinrichtung (7), die dazu vorgesehen und eingerichtet ist, derart auf die Dachscheibe (6) einzuwirken, dass die Lichtdurchlässigkeit der Dachscheibe (6) nach Bedarf geändert werden kann.

## Beschreibung

Die vorliegende Anmeldung betrifft eine Fahrzeugkabine für einen landwirtschaftlichen Traktor gemäß dem Oberbegriff von Anspruch 1. Ferner betrifft die vorliegende Anmeldung einen landwirtschaftlichen Traktor gemäß dem Oberbegriff von Anspruch 9 sowie ein Verfahren zu dessen Betrieb gemäß dem Oberbegriff von Anspruch 11.

Die Fahrzeugkabine umfasst einen Kabineninnenraum, der von Raumbegrenzungselementen räumlich umbaut ist. Dabei ist eines der Raumbegrenzungselemente von einer Windschutzscheibe und ein weiteres Raumbegrenzungselement von einem Kabinendach gebildet. In dem Kabinendach ist eine transparente Dachscheibe angeordnet.

Fahrzeugkabinen der vorstehend beschriebenen Art sind aus dem Stand der Technik bereits bekannt. Hierzu wird beispielhaft auf das europäische Patent EP 2 851 273 B1 verwiesen. Die bekannte Fahrzeugkabine ist so vorgesehen, dass die transparente Dachscheibe und die Windschutzscheibe unmittelbar aneinander angrenzen. Somit wird ein Sichtfeld für den Fahrer des Nutzfahrzeugs erzeugt, das ohne Unterbrechung bis weit in den Bereich des Kabinendachs hinein erweitert ist. Hierdurch können auch Arbeitstätigkeiten mit dem Nutzfahrzeug, welche in einer oberhalb der Kabine liegenden Ebene stattfinden oder sich auf diesen Bereich auswirken, direkt von der Position des Fahrers aus überwacht werden. Demnach wird beispielsweise bei einem Traktor das Arbeiten und Rangieren mit einem Frontlader im oberen Hubbereich deutlich vereinfacht. Da der Fahrer auch eine gute Sicht auf den oberhalb des Kabinendachs liegenden Bereich hat, kann das Unfallrisiko gerade beim Arbeiten mit einem Frontlader erheblich reduziert werden.

Dem großen Vorteil der freien Sicht auf einen äußerst großen Arbeitsbereich steht der Nachteil gegenüber, dass die Sicht eines Bedieners durch die Dachscheibe, die in der Praxis auch als "Panoramafenster" bezeichnet wird, insbesondere bei der Arbeit mit einem Frontlader, durch direktes, blendendes Sonnenlicht und/oder durch zu intensives Streulicht erschwert werden kann. Hierdurch wird wiederum die Sicherheit bei der Bedienung des Frontladers erheblich beeinträchtigt. Darüber hinaus kann der Eintritt von Sonnenlicht durch die Dachscheibe zu einem sehr hohen Wärmeeintrag in die Fahrzeugkabine führen, was für den sich in der Fahrzeugkabine befindenden Bediener äußerst unangenehm werden kann.

Zum Schutz vor Blendlicht und Wärmeeintrag ist es bekannt, Schutzeinrichtungen, insbesondere in Form klappbarer Sonnenschutzblenden oder ausziehbarer Sonnenschutzrollos, zu verwenden, welche an bzw. in unmittelbarer Nähe der Dachscheibe angeordnet werden. Nachteilig ist hierbei jedoch, dass durch diese Schutzreinrichtungen die Sicht des Bedieners in den Bereichen zumindest eingeschränkt, schlimmstenfalls vollständig blockiert wird. Insbesondere für die Dachscheibe einer Fahrzeugkabine eines Traktors ist eine solche Schutzeinrichtung nachteilig, da damit eine Arbeit mit einem Frontlader nicht mehr sicher erfolgen kann.

Der vorliegenden Anmeldung liegt mithin die Aufgabe zugrunde, einen alternativen Schutz vor durch die Dachscheibe einfallenden Blendlichts und durch die Dachscheibe stattfindenden Wärmeeintrags zur Verfügung zu stellen.

Die zugrunde liegende Aufgabe wird erfindungsgemäß mittels einer Fahrzeugkabine mit den Merkmalen des Anspruchs 1 gelöst. Vorteilhafte Ausgestaltungen ergeben sich aus den zugehörigen Unteransprüchen.

Die erfindungsgemäße Fahrzeugkabine ist durch eine ansteuerbare Einstelleinrichtung gekennzeichnet, die dazu vorgesehen und eingerichtet ist, derart auf die Dachscheibe einzuwirken, dass die Lichtdurchlässigkeit der Dachscheibe nach Bedarf geändert werden kann. Die Änderung kann je nach aktueller Lichtdurchlässigkeit der Dachscheibe in einer Erhöhung der Lichtdurchlässigkeit oder ihrer Verringerung bestehen. **In** dem wesentlichen Fall, dass die Lichtdurchlässigkeit der Dachscheibe maximal ist (unbeeinflusst durch die Einstelleinrichtung) kann die Lichtdurchlässigkeit infolge Einwirkung der Einstelleinrichtung verringert werden, wenn in vorstehend beschriebener Weise Sonnenlicht in ungewünschter Weise durch die Dachscheibe in den Kabineninnenraum der Fahrzeugkabine strahlt. Die Verringerung der Lichtdurchlässigkeit der Dachscheibe führt zu einer Reduzierung der Einstrahlung von Licht, so dass einem Blendlicht und einem Wärmeeintrag entgegengewirkt wird. Bei maximaler Lichtdurchlässigkeit (Lichtdurchlässigkeit von 100 %, entspricht der natürlichen Lichtdurchlässigkeit des Materials, aus dem die Dachscheibe besteht) kann das Licht abgesehen von natürlichen bzw. materialbedingten Effekten der Dachscheibe ungehindert in den Kabineninnraum gelangen. Durch die Änderung der Lichtdurchlässigkeit ist die Lichtdurchlässigkeit veränderbar. Bei der Einstelleinrichtung kann es sich beispielsweise um eine solche handeln, die manuell von einem Maschinenführer bedient wird. Andere Einstelleinrichtungen sind ebenfalls denkbar. Wenn der Bediener beispielsweise bei unerwünschten Blendlicht manuell einstellt, dass die Lichtdurchlässigkeit der Dachscheibe verringert werden soll, wirkt die Einstelleinrichtung entsprechend auf die Dachscheibe ein. Sobald störendes Sonnenlicht verschwunden ist, kann die Lichtdurchlässigkeit wieder gesteigert werden.

Gemäß einer vorteilhaften Ausführungsform der Erfindung ist die Einstelleinrichtung dazu vorgesehen und eingerichtet, derart auf die Dachscheibe einzuwirken, dass die Lichtdurchlässigkeit der Dachscheibe vollflächig oder bereichsweise geändert wird. Bei einer bereichsweisen Änderung kann vorzugsweise vorgesehen sein, dass die Dachscheibe in Längsrichtung logisch in drei, vier oder fünf Scheibenbereiche unterteilt ist, in denen unabhängig voneinander die Lichtdurchlässigkeit der Dachscheibe geändert werden kann. Durch die Unterteilung verschiedener Scheibenbereiche, die im Hinblick auf ihre Lichtdurchlässigkeit separat voneinander einstellbar sind, kann insgesamt eine bedarfsgerechte Einstellung der Lichtdurchlässigkeit vorgenommen werden. Die Lichtdurchlässigkeit kann beispielsweise nur in einem Scheibenbereich erfolgen. Alternativ kann die Lichtdurchlässigkeit der verschiedenen Scheibenbereiche auch in abgestufter Form erfolgen, so dass beispielsweise ein in Fahrtrichtung vorne befindlicher Scheibenbereich eine hohe Reduzierung der Lichtdurchlässigkeit erhält, während die Reduzierung der Lichtdurchlässigkeit der dahinter befindlichen Scheibenbereiche stufenweise geringer ausfällt. Auf diese Weise kann die Einstellung der Lichtdurchlässigkeit äußerst individuell erfolgen.

Bevorzugt ist die Einstelleinrichtung dazu vorgesehen und eingerichtet, derart auf die Dachscheibe einzuwirken, dass die Änderung der Lichtdurchlässigkeit in einem Bereich zwischen 100% Lichtdurchlässigkeit und 20% Lichtdurchlässigkeit vorgenommen werden kann. Gemäß der vorliegenden Anmeldung wird eine Lichtdurchlässigkeit von 100% so verstanden, dass die natürliche Lichtdurchlässigkeit der Dachscheibe unverändert und somit nicht reduziert ist. Eine Lichtdurchlässigkeit der Dachscheibe von 0% bedeutet, dass die Dachscheibe opak (vollständig lichtundurchlässig) ist. Erfindungsgemäß kann vorgesehen sein, dass die Einstellung der Lichtdurchlässigkeit in Stufen erfolgt, also beispielsweise in Schritten von 5 %. Alternativ kann vorgesehen sein, dass die Einstellung stufenlos erfolgt.

Die Erfindung weiter vorteilhaft ausgestaltend kann vorgesehen sein, dass wenn die Dachscheibe von sog. "intelligentem Glas" ("Smart Glass") gebildet ist. Insbesondere kann die Dachscheibe von elektrochromem Glas, PDLC-Glas (Polymer-Dispersed-Liquid-Crystal-Glas) oder SPD-Glas (Suspended-Particle-Devices-Glas) gebildet sein. die Lichtdurchlässigkeit der Dachscheibe durch das Anlegen einer elektrischen Spannung änderbar ist. Vorzugsweise ist die Dachscheibe von SPD-Glas (Suspended-Particle-Devices-Glas) oder von PDLC-Glas (Polymer-Dispersed-Liquid-Crystal-Glas) gebildet, das auf dem Markt erhältlich ist. Derartiges Glas verfügt typischerweise über eine zwischen einzelnen Scheibenelementen einlaminierte Folie, deren Lichtdurchlässigkeit infolge des Anlegens elektrischer Spannung veränderbar ist. Mittels einer Beeinflussung einer solchen Folie kann die Lichtdurchlässigkeit der Dachscheibe besonders einfach geändert werden. Die Regulierung über die Änderung einer elektrischen Spannung ist insbesondere in einer Fahrzeugkabine besonders einfach umsetzbar, da auf eine bereits vorhandene Stromversorgung zurückgegriffen werden kann. Die Veränderung der Lichtdurchlässigkeit besteht bei SPD-Glas typischerweise darin, dass das Glas "milchig" wird und daher weniger Licht durchlässt. Besonders bevorzugt ist die Verwendung von PDLC-Glas für die Dachscheibe, mittels dessen ein Abdunklungseffekt erreicht werden kann.

Die erfindungsgemäße Fahrzeugkabine weiter ausgestaltend ist mindestens eine Bedieneinrichtung vorgesehen, die in dem Kabineninnenraum angeordnet ist, wobei die Bedieneinrichtung in Daten übertragender Weise mit der Einstelleinrichtung verbunden ist. Auf diese Weise kann ein Benutzer mittels der Bedieneinrichtung darauf einwirken, dass die Einstelleinrichtung auf die Dachscheibe einwirkt, um deren Lichtdurchlässigkeit zu ändern. Als Bedieneinrichtung kann beispielsweise ein Bedienpult mit Knöpfen oder ein Touchscreen vorgesehen sein, an denen der Bediener entsprechende Eingaben zur Veränderung der Lichtdurchlässigkeit der Dachscheibe vornehmen kann. Andere Bedieneinrichtungen sind ebenfalls denkbar. Beispielsweise kann die Bedieneinrichtung mit einer Datenverarbeitungsanlage sowie in Verbindung mit der Einstelleinrichtung als ein Bediensystem ausgebildet sein.

In einer vorteilhaften Weiterbildung kann ferner eine optische Sensoreinrichtung vorgesehen sein, mittels der optische Informationen erfassbar und an die Einstelleinrichtung leitbar sind. Dabei ist die Einstelleinrichtung dazu vorgesehen und eingerichtet, die Informationen der Sensoreinrichtung zu verarbeiten und in Abhängigkeit der Informationen automatisch auf die Dachscheibe einzuwirken und dadurch ihre Lichtdurchlässigkeit zu ändern. Bei der optischen Sensoreinrichtung kann es sich beispielsweise um eine Kamera handeln, die die äußere Umgebung der Fahrzeugkabine erfasst. Alternativ könnte die Sensoreinrichtung beispielsweise als Helligkeitssensor ausgebildet sein. Die erfassten Informationen werden bevorzugt automatisch an die Einstelleinrichtung gesendet und dort verarbeitet und bei Vorliegen eines Handlungsbedarfs wird die Lichtdurchlässigkeit der Dachscheibe automatisch eingestellt. Beispielsweise kann ein Handlungsbedarf dann vorliegen, wenn die Sensoreinrichtung eine starke Helligkeit feststellt, die oberhalb eines vorgegebenen Schwellenwerts liegt.

Auch kann es vorteilhaft sein, wenn die Einstelleinrichtung dazu vorgesehen und eingerichtet ist, automatisch in Abhängigkeit eines aktiven landwirtschaftlichen Arbeitsauftrags zwecks Veränderung der Lichtdurchlässigkeit auf die Dachscheibe einzuwirken. Beispielsweise ist es denkbar, dass der aktuelle landwirtschaftliche Arbeitsauftrag in Arbeit mit dem Frontlader besteht. Bei der Arbeit mit dem Frontlader tritt es häufig auf, dass der Bediener weit nach oben schaut und somit auch direkt durch die Dachscheibe. Bei diesem Arbeitsauftrag ist etwaiges Blendlicht daher besonders störend. Eine Verringerung der Lichtdurchlässigkeit der Dachscheibe kann daher bei diesem Arbeitsauftrag von wesentlich größerer Bedeutung sein als bei einem anderen. Eine automatische Veränderung der Lichtdurchlässigkeit der Dachscheibe in Abhängigkeit des landwirtschaftlichen Arbeitsauftrags ist daher besonders hilfreich, um den Bediener je nach Arbeitssituation zu entlasten.

Ferner kann es gemäß einer Ausgestaltung vorteilhaft sein, wenn das Kabinendach von Polycarbonat gebildet ist. Polycarbonat zeichnet sich durch ein geringes Gewicht bei gleichzeitig hoher Festigkeit aus. Ferner ist Polycarbonat hitzebeständig.

Schließlich sieht eine vorteilhafte Weiterbildung der erfindungsgemäßen Fahrzeugkabine vor, dass die Dachscheibe und die Windschutzscheibe unmittelbar aneinander angrenzen, wobei vorzugsweise die Windschutzscheibe und die Dachscheibe über eine zwischenliegende Dichtung aneinander befestigt sind. Hierdurch entsteht der Vorteil, dass die Sicht für einen Maschinenführer vom Boden bis zum Himmel durchgehend frei von Hindernissen ist, wie es beispielsweise der Fall wäre, wenn zwischen Windschutzscheibe und Dachscheibe Verbindungspfosten vorgesehen wären, die die Sicht einschränken würden.

Die zugrunde liegende Aufgabe wird außerdem mittels eines landwirtschaftlichen Traktors mit den Merkmalen des Anspruchs 9 gelöst. Dieser Traktor umfasst erfindungsgemäß eine Fahrzeugkabine gemäß einer der vorstehend beschriebenen Ausgestaltungen. Die sich hierdurch ergebenden Vorteile sind vorstehend bereits dargelegt. Insbesondere wird erreicht, dass der Maschinenführer ein großes Sichtfeld hat, wobei starke Sonneneinstrahlung in den Kabineninnenraum durch Reduzierung der Lichtdurchlässigkeit der Dachscheibe verhindert werden kann. Dabei kann vorgesehen sein, dass der Maschinenführer durch Betätigung der Einstelleinrichtung die Lichtdurchlässigkeit ändert. Alternativ kann eine automatische Einstellung der Lichtdurchlässigkeit mit Hilfe einer optischen Sensoreinrichtung vorgesehen sein.

Gemäß einer vorteilhaften Ausgestaltung des Traktors ist die Einstelleinrichtung dazu vorgesehen und eingerichtet, auf die Dachscheibe zum Zweck der Änderung ihrer Lichtdurchlässigkeit in Abhängigkeit eines aktuellen Arbeitsauftrags des Traktors einzuwirken. Beispielsweise ist es denkbar, dass bei Aktivierung eines Frontladers und bei Vorliegen starker Sonneneinstrahlung die Lichtdurchlässigkeit der Dachscheibe entsprechend automatisch geändert wird.

Schließlich wird die zugrunde liegende Ausgabe mittels eines Verfahrens zum Betrieb eines landwirtschaftlichen Traktors mit den Merkmalen des Anspruchs **11** gelöst. Das Verfahren ist dadurch gekennzeichnet, dass die Lichtdurchlässigkeit der in dem Kabinendach der Fahrzeugkabine angeordneten Dachscheibe in Abhängigkeit äußerer Lichtverhältnisse und/oder in Abhängigkeit eines aktuellen landwirtschaftlichen Arbeitsauftrags geändert wird. Die sich hierdurch ergebenden Vorteile sind vorstehend bereits dargelegt.

Die Erfindung ist nachstehend anhand eines Ausführungsbeispiels, das in den Figuren dargestellt ist, näher erläutert. Es zeigt:
- Fig. 1:: Eine Seitenansicht eines erfindungsgemäßen landwirtschaftlichen Traktors mit einer erfindungsgemäßen Fahrzeugkabine,
- Fig. 2:: Eine perspektivische Ansicht der Fahrzeugkabine aus Figur 1,
- Fig. 3:: Eine perspektivische Ansicht des Kabinendachs der Fahrzeugkabine aus Figur 2.

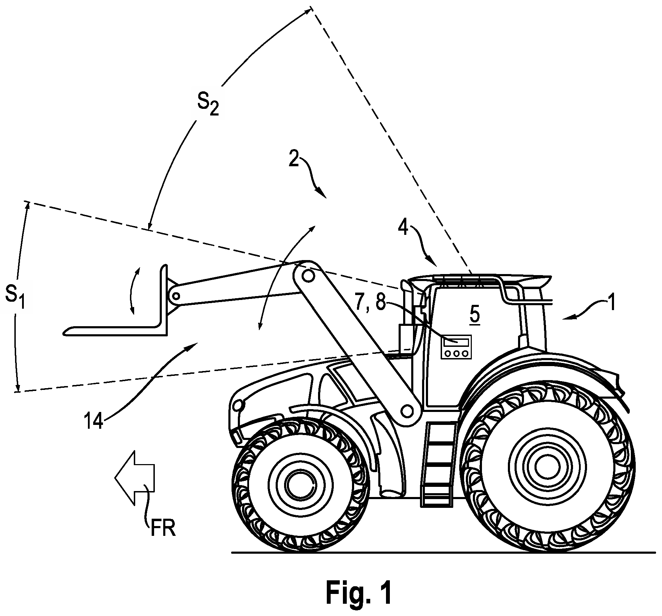

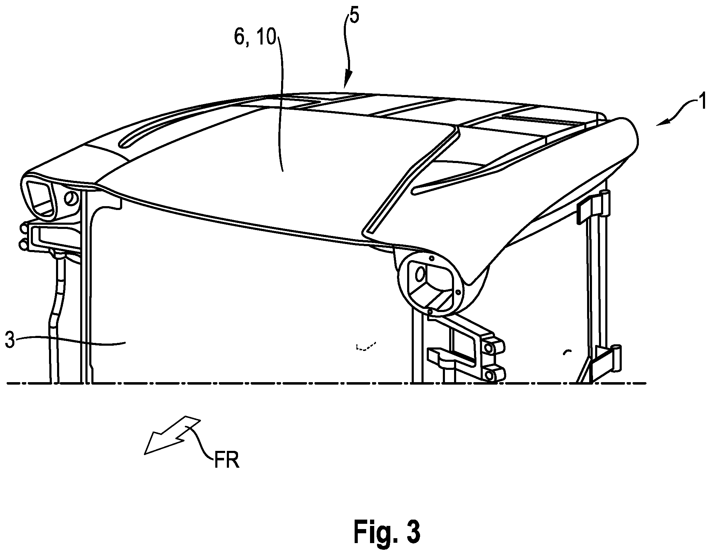

Ein Ausführungsbeispiel, das in den **Figuren 1 bis 3** dargestellt ist, umfasst einen erfindungsgemäßen landwirtschaftlichen Traktor **2,** der mit einer erfindungsgemäßen Fahrzeugkabine **1** ausgestattet ist. Der grundsätzliche Aufbau des Traktors **2** ist bekannt.

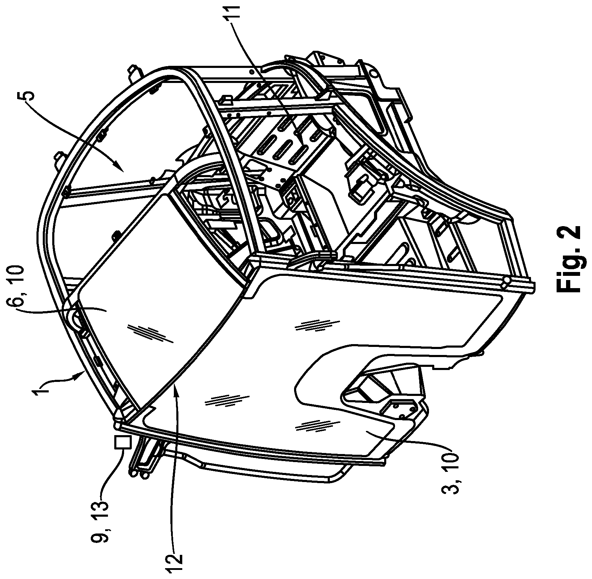

Der Aufbau der erfindungsgemäßen Fahrzeugkabine **1** ist besonders gut in der **Figur 2** zu erkennen. Die Fahrzeugkabine **1** umfasst einen Kabineninnenraum **5,** der von Raumbegrenzungselementen **10** in Form von nicht in den Figuren dargestellten Seitenscheiben, einer Windschutzscheibe **3,** einer ebenfalls nicht in den Figuren dargestellten Rückscheibe sowie eines Kabinendachs **4** umbaut ist. Auf die Darstellung des Kabinendachs **4** wurde in der **Figur 2** zum Zwecke einer besseren Übersicht größtenteils verzichtet. In dem Kabineninnenraum **5** ist ein Fahrersitz **11** angeordnet, auf dem ein Maschinenführer Platz nehmen kann.

Das Kabinendach **4** umfasst eine transparente Dachscheibe **6,** so dass sich ein Sichtfeld **S** des Maschinenführers auch oberhalb des Kabinendachs **4** erstreckt und sich aus einem der Windschutzscheibe **3** zugeordneten Sichtfeld **S1** sowie einem der Dachscheibe **6** zugeordneten Sichtfeld **S2** zusammensetzt. Die Dachscheibe **6** grenzt unmittelbar an die Windschutzscheibe **3,** so dass sich im Sichtfeld **S** keine störenden Riegel oder ähnliches befinden. Die Dachscheibe **6** und die Windschutzscheibe **3** sind über eine zwischenliegende Dichtung **12** aneinander befestigt.

Die Fahrzeugkabine **1** besitzt erfindungsgemäß eine ansteuerbare Einstelleinrichtung **7,** die dazu vorgesehen und eingerichtet ist, derart auf die Dachscheibe **6** einzuwirken, dass die Lichtdurchlässigkeit der Dachscheibe **6** nach Bedarf geändert werden kann. Beispielsweise kann durch eine Verringerung der Lichtdurchlässigkeit bei vorliegender hoher Sonneneinstrahlung eine Reduzierung der Einstrahlung herbeigeführt werden, so dass sowohl einem Blendlicht als auch einem Wärmeeintrag entgegengewirkt wird.

Die Dachscheibe **6** weist drei parallel zueinander verlaufende Scheibenbereiche auf, die quer zur Fahrtrichtung **FR** verlaufen. Es ist vorgesehen, dass die Lichtdurchlässigkeit in diesen drei Scheibenbereichen unabhängig voneinander eingestellt werden kann, so dass eine Einstellung der Lichtdurchlässigkeit sehr individuell erfolgen kann. Alternativ kann die Dachscheibe **6** auch in vier, fünf oder mehr Scheibenbereiche unterteilt sein.

Die Dachscheibe **6** besteht aus einem so genannten "intelligenten Glas" ("Smart Glass"), das sich dadurch auszeichnet, dass seine Lichtdurchlässigkeit durch das Anlegen einer elektrischen Spannung änderbar ist. Im vorliegenden Fall ist die Dachscheibe **6** von PDLC-Glas (Polymer-Dispersed-Liquid-Crystal-Glas) gebildet.

Im vorliegenden Beispiel ist die Einstelleinrichtung **7** baulich mit einer Bedieneinrichtung **8** zusammengesetzt, wobei Einstelleinrichtung **7** und Bedieneinrichtung **8** in Daten übertragender Weise miteinander verbunden sind. Über die Bedieneinrichtung **8** kann ein Maschinenführer die Einstelleinrichtung **7** so betätigen, dass die Lichtdurchlässigkeit der Dachscheibe **6** geändert wird. Selbstverständlich ist es auch möglich, Einstelleinrichtung **7** und Bedieneinrichtung **8** in zwei getrennten baulichen Einheiten vorzusehen.

Ferner verfügt die Fahrzeugkabine **1** über eine optische Sensoreinrichtung **9,** mittels der optische Informationen erfassbar und an die Einstelleinrichtung **7** leitbar sind. Dabei ist vorgesehen, dass die Einstelleinrichtung **7** auf Basis der erfassten Informationen automatisch auf die Lichtdurchlässigkeit der Dachscheibe **4** einwirkt. Im vorliegenden Beispiel handelt es sich bei der optischen Sensoreinrichtung **9** um einen Helligkeitssensor 13, der erkennt, wenn in der Umgebung eine grelle Sonneneinstrahlung vorherrscht. Dementsprechend ist vorgesehen, dass bei Überschreitung einer vorgegebenen Helligkeit automatisch eine entsprechende Anpassung der Lichtdurchlässigkeit der Dachscheibe **4** erfolgt. Alternativ oder zusätzlich kann vorgesehen sein, dass eine Anpassung der Lichtdurchlässigkeit der Dachscheibe **4** erfolgt, wenn ein bestimmter Arbeitsauftrag des Traktors **2** vorliegt. Beispielsweise wird bei Betätigung eines Frontladers **14** und bei Überschreiten einer vorgegebenen Helligkeit auf die Lichtdurchlässigkeit der Dachscheibe **4** eingewirkt.

### Bezugszeichenliste

- 1: Fahrzeugkabine
- 2: Traktor
- 3: Windschutzscheibe
- 4: Kabinendach
- 5: Kabineninnenraum
- 6: Dachscheibe
- 7: Einstelleinrichtung
- 8: Bedieneinrichtung
- 9: Sensoreinrichtung
- 10: Raumbegrenzungselement
- 11: Fahrersitz
- 12: Dichtung
- 13: Helligkeitssensor
- 14: Frontlader

- S: Sichtfeld
- S1: Sichtfeld Windschutzscheibe
- S2: Sichtfeld Dachscheibe
- FR: Fahrtrichtung

## Patentansprüche

1. Fahrzeugkabine (1) für einen landwirtschaftlichen Traktor (2), umfassend einen von Raumbegrenzungselementen (10) räumlich umbauten Kabineninnenraum (5),
wobei eines der Raumbegrenzungselemente (10) von einer Windschutzscheibe (3) und ein weiteres der Raumbegrenzungselemente (10) von einem Kabinendach (4) gebildet sind,
wobei in dem Kabinendach (4) eine transparente Dachscheibe (6) angeordnet ist,
**gekennzeichnet durch**
eine ansteuerbare Einstelleinrichtung (7), die dazu vorgesehen und eingerichtet ist, derart auf die Dachscheibe (6) einzuwirken, dass die Lichtdurchlässigkeit der Dachscheibe (6) nach Bedarf geändert werden kann.

2. Fahrzeugkabine (1) nach Anspruch 1, **dadurch gekennzeichnet, dass** die Einstelleinrichtung (7) dazu vorgesehen und eingerichtet ist, derart auf die Dachscheibe (6) einzuwirken, dass die Lichtdurchlässigkeit der Dachscheibe (6) vollflächig oder bereichsweise geändert wird, wobei vorzugsweise die Dachscheibe (6) in Längsrichtung logisch in drei, vier oder fünf Scheibenbereiche unterteilt ist, in denen unabhängig voneinander die Lichtdurchlässigkeit der Dachscheibe (6) geändert werden kann.

3. Fahrzeugkabine (1) nach einem der vorhergehenden Ansprüche, **dadurch gekennzeichnet, dass** die Einstelleinrichtung (7) dazu vorgesehen und eingerichtet ist, derart auf die Dachscheibe (6) einzuwirken, dass die Änderung der Lichtdurchlässigkeit in einem Bereich zwischen 100% Lichtdurchlässigkeit und 20% Lichtdurchlässigkeit vorgenommen werden kann, vorzugsweise stufenlos.

4. Fahrzeugkabine (1) nach einem der vorhergehenden Ansprüche, **dadurch gekennzeichnet, dass** die Lichtdurchlässigkeit der Dachscheibe (6) durch das Anlegen einer elektrischen Spannung änderbar ist, wobei vorzugsweise die Dachscheibe (6) von SPD-Glas oder von PDLC-Glas gebildet ist.

5. Fahrzeugkabine (1) nach einem der vorhergehenden Ansprüche, **gekennzeichnet durch** mindestens eine Bedieneinrichtung (8), die in dem Kabineninnenraum (5) angeordnet ist, wobei die Bedieneinrichtung (8) in Daten übertragender Weise mit der Einstelleinrichtung (7) verbunden ist, sodass ein Benutzer mittels der Bedieneinrichtung (8) darauf einwirken kann, dass die Einstelleinrichtung (7) auf die Dachscheibe (6) einwirkt, um deren Lichtdurchlässigkeit zu ändern.

6. Fahrzeugkabine (1) nach einem der vorhergehenden Ansprüche, **gekennzeichnet durch** eine optische Sensoreinrichtung (9), mittels der optische Informationen erfassbar und an die Einstelleinrichtung (7) leitbar sind, wobei die Einstelleinrichtung (7) dazu vorgesehen und eingerichtet ist, in Abhängigkeit von den von der Sensoreinrichtung (9) erfassten Informationen automatisch auf die Dachscheibe (6) einzuwirken und dadurch ihre Lichtdurchlässigkeit zu ändern.

7. Fahrzeugkabine (1) nach einem der vorhergehenden Ansprüche, **dadurch gekennzeichnet, dass** das Kabinendach (4) von Polycarbonat gebildet ist.

8. Fahrzeugkabine (1) nach einem der vorhergehenden Ansprüche, **dadurch gekennzeichnet, dass** die Dachscheibe (6) und die Windschutzscheibe (3) unmittelbar aneinander angrenzen, wobei vorzugsweise die Windschutzscheibe (3) und die Dachscheibe (4) über eine zwischenliegende Dichtung (12) aneinander befestigt sind.

9. Landwirtschaftlicher Traktor (2), umfassend eine Fahrzeugkabine (1),
**dadurch gekennzeichnet, dass**
die Fahrzeugkabine (1) gemäß einem der vorhergehenden Ansprüche ausgebildet ist.

10. Landwirtschaftlicher Traktor (2) nach Anspruch 12, **dadurch gekennzeichnet, dass** die Einstelleinrichtung (7) dazu vorgesehen und eingerichtet ist, auf die Dachscheibe (6) zum Zweck der Änderung ihrer Lichtdurchlässigkeit in Abhängigkeit eines aktuellen Arbeitsauftrags des Traktors (2) einzuwirken.

11. Verfahren zum Betrieb eines landwirtschaftlichen Traktors (2) gemäß einem der Ansprüche 12 oder 13, **dadurch gekennzeichnet, dass** die Lichtdurchlässigkeit der in dem Kabinendach (4) der Fahrzeugkabine (1) angeordneten Dachscheibe (6) in Abhängigkeit äußerer Lichtverhältnisse und/oder in Abhängigkeit eines aktuellen landwirtschaftlichen Arbeitsauftrags geändert wird.
